# EUROPEAN PATENT APPLICATION

(11) **EP 0 539 640 A1**
(43) Date of publication of application: **05.05.1993**
(21) Application number: 91402919.4
(22) Date of filing: 30.10.1991
(51) Int. Cl.: H02J 7/10

(54) **Improvements in or relating to batteries**

(71) Applicant: TEXAS INSTRUMENTS LIMITED, Bedford MK41 7PA (GB); TEXAS INSTRUMENTS FRANCE, F-06270 Villeneuve Loubet (FR)
(72) Inventor: Farley,Joseph Apt. 215, F-06270 Villeneuve-Loubet (FR)
(74) Representative: Obolensky, Michel

(57) **Abstract**

A battery pack including a charge protection circuit is disclosed providing for charge current shunting in response to substantially full charge detection, battery characteristics mimicing and charge monitoring battery cell conditioning.

## Description

The present invention relates to batteries and in particular to rechargeable batteries and the recharging thereof, for example Nickel Cadmium Metal Hydride ad other battery types. The invention also relates to battery packs including such batteries and protection circuits for batteries.

When Nickel Cadmium batteries, for example, are charged, pressure within the battery casing increases, being particularly severe when the battery reaches full charge. If the battery is charged with a low or trickle current, then the battery is designed to withstand the increased pressure. In the case of a fast charge however, where a high current is necessarily employed, there is a significant risk of battery explosion if the battery were to reach full charge and the fast charging current maintained. For this reason, fast chargers typically are arranged to reduce the charging current to at least a trickle level upon detection of the temperature rise associated with full charge. More sophisticated chargers might detect the fall in voltage associated with full charge to trigger a reduction in charging current to a safe level, this latter technique known in the art as negative delta voltage control. Hence, it may be appreciated that a charger of both suitable type and rating for the battery being charged must be employed. There would, for example, be a significant risk in charging a battery of the Nickel Hydride type with a charger intended for Nickel Cadmium type and the attend risk of their use with Nickel Hydride batteries has adversely affected the commercial introduction of this latter type of battery.

According to the present invention in one aspect thereof there is provided a battery pack as defined by claim I appended hereto.

Problems addressed by the present invention include the following:
a) The classical approach of in situe battery protection is the use of a temperature sensing bimetallic strip that is in series with the battery current; only absolute temperature protection is therefore possible ad can occur for charge or discharge currents.
b) Other solutions are not easily applicable to newer Battery Technologies.

In order that features and advantages of the present invention may be further appreciated, embodiments will now be described with reference to the accompanying diagrammatic drawings of which:
Fig 1 represents a battery, charger and protection circuit,
Fig 2 and Fig 3 represent battery pack in schematic form

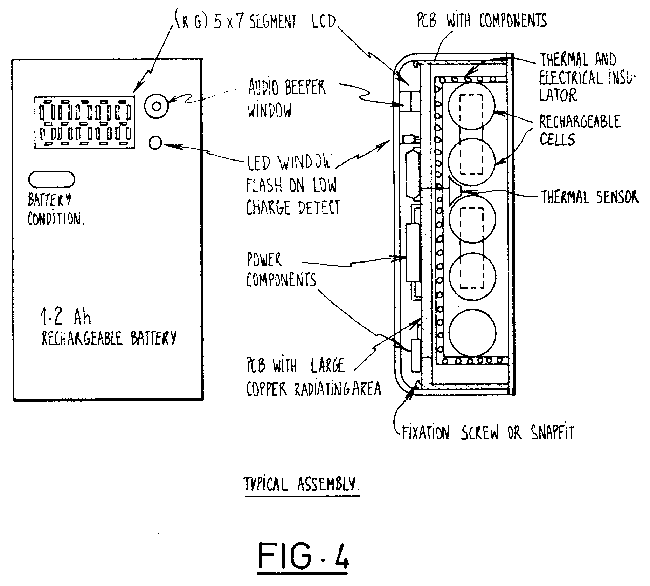

Fig 4 shows a battery pack layout drawing and
Fig 5 and Fig 6 is a flow chart of typical operation.

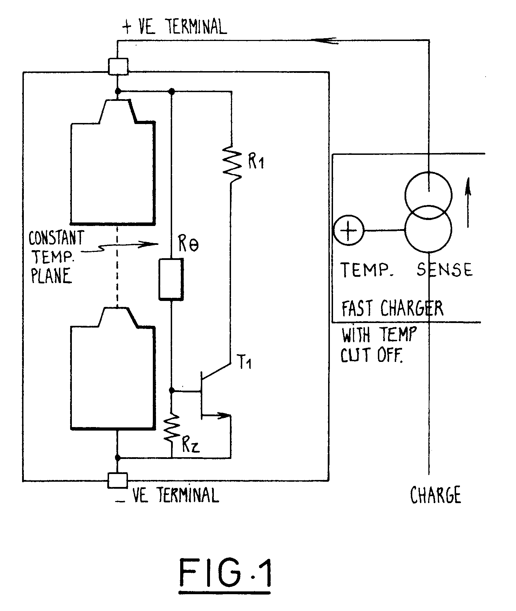

Fig 1 shows a battery pack providing overcharge protection with NiCads and inparticular the newer battery technologies of Ni Metal Hydride,Lithiums, etc, great difficulties arises in fast recharge without reducing the life time (no. of charge discharge cycles). Full charge detection and immediate stopping of fast charge current is imperative for preservation of battery longevity. At full charge, heat is generated within the cell resulting in increase of temperature and a change in cell voltage (NiCad-ve Av phenomina).

It is therefore proposed in accordance with the present invention to include within the battery pack negative temp coeff resistor R₀, transistor off resistor R₂ power absorbing resistor R₁, and a power switching transistor T₁ (Fig 1).

R₀ and R₂ are defined such that at a pre selected temperature T₁ begins to conduct. The charging current (fast charge current) is then diverted from the cells into T₁,i.e. shunted from the cells. R₁ increases the temperature of the battery pack permitting temperature or delta temperature function of the external charge's end of charge fast current arrest (as used by some fast charges). Up to say 6 watts can be radiated from R₁ resulting in an acceptable (in terms of battery life) battery operating temperature; in this case, the charger's fast charge current only needs to be shunted leading to a simple charger with no full charge detection itself. It will be necessary to have appropriate thermal resistance between R₁ and R₀ by physical layout. A more elaborate system can be implemented permitting delta temperature and an integral charge meter with LCD display, for example by in/out charge counting.

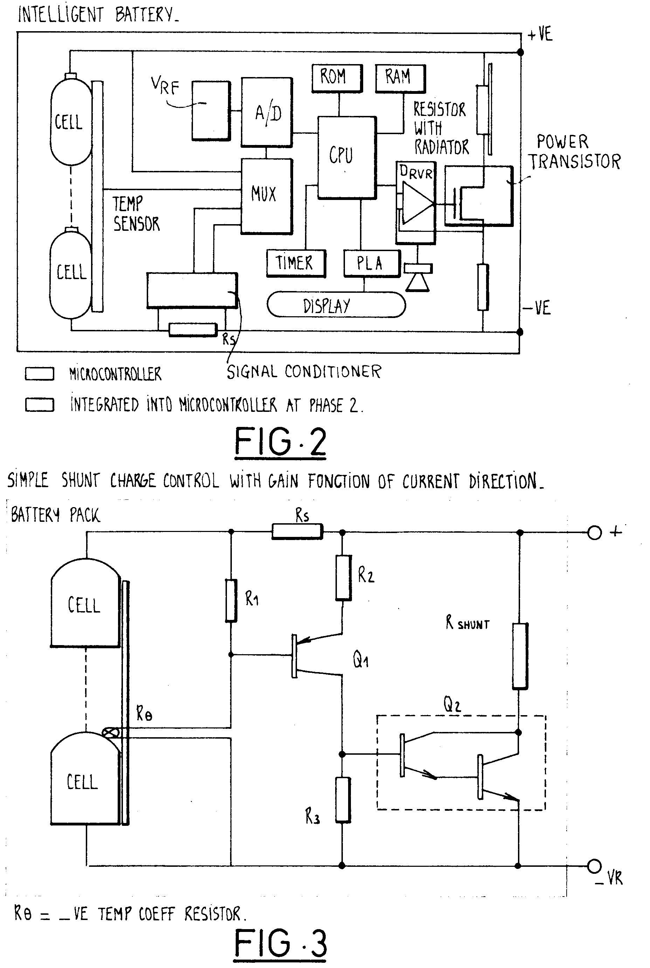

Fig 2 shows such an arrangement providing overcharge protection and charge metering. T, R, are power switch and power absorbing resistor.
R2 represents a sense resistor determination of the current magnitude and direction Use of a Hall device call take away the use of this resistor thus keeping the Load on the battery the same and its impedance unchanged. The processor is a sensor type microprocessor with ROM and RAM, inputs permitting the periodic measuring of cell temperature, battery packs current amprutude and direction (when used with R2) or Hall effect device.

The signals that commands T₁ to be on is used to give the battery full charge reference. When the battery voltage goes below say 1 Volt per cell (predetermined per type of cell), the cells are considered to be completely discharged giving the zero charge reference. These references are updated in nonvoltive rewritable memory and thus permits present total battery capacity to be completed.

In the uPs memory, preprogrammed battery information is loaded. Type, date, present capacity, etc can be flashed in the display for say 5 seconds at the start of each charge cycle. This provides the following features:
- cheap charger circuits can be used
- charge meter always tracks its own battery
- no activity thus R₂ places uP into current standby mode and T₁ off
- when T₁ on current taken from battery monitored thus R₂
- program can take account of cell self discharge current (and magnitude of discharge-current with temp).
- low battery warning can be "beeps" produced by watch-type beepers
- battery temp rise due to charging current known by micro processor as current directed is monitored
Non volatile rewritable memory is required for updated information present capacity is charge/discharge. LCD display used for cycle messages (e.g. battery charging in progress or battery type date etc) and battery charge and status. Beeper used for audio is battery warming and end of charge. C permits operation of uP for a limited time after battery is completely (flat) discharged. u Micro-processor permits temperature limits.

### Functions

1. Protect cells from over charge through uP monitoring of cell temp with time, say each 5-10 seconds then on measuring delta T profile (set in memory) T₁ is switched on to shunt the charging current. The battery pack temp rises permitting simple full charge detection by temperature to be used in ending fast change current. It will be necessary to have an appropriate thermal path between R₁ and R₀.
2. The integration of the current through R₂ permits change magnitude in and out of the cells to be monitored in and stored.

The protection and metering circuit of Fig 2 may be integrated; the lightly shaded elements may be integrated as a micro-controller alternatively, all shaded elements could be integrated. A mirco-controller based system will now be considered in more detail.

The system includes a 'sensor' type micro-controller (e,g, TI's TSS 400 series), battery cell temperature sensor, a high current shunting transistor, a distributed heat radiating resistor, a current sense resistor ad ancilliary display and audio beeping, all resident within the battery pack.

For the battery technology (Nickel Cadmium, Nickel Hydride, etc) store the characteristic temperature profile for the battery type reaching full charge in the non-volatile ROM of the micro-controller. On a periodic basis monitor the current flowing through the current sensing resistor (.025 Ohms in series with the battery output terminal will not greatly swamp the cells internal impedance) and ascertain the direction and amplitude of the current and the present cell temperature in real time.

On detection of a temperature rise of the form that indicates full charge for the battery type, the micro-controller checks with its stored data as to whether the magnitude of the charging current is below the threshold demanding full charge supervision; if so, no shunting of the charge current will be required on reaching full charge. However, if the charge current is great enough to require full charge supervision, the magnitude of the charge current shunted is computed to result in a net c/10 (or of magnitude recommended by the battery manufacturer) current into the cells. (Large capacity batteries can be equipped with additional terminals permiting a failsafe charger control protocol to exist between the battery and the charging circuit enabling direct control over the charging current).

During this 'shunting' period, the current into the cells continues to be monitored by the micro-controller and its magnitude compared to that permitted after full charge detect; if greater that c/10 plus the maximum possible shunt current, an alarm (beeps and flashing display) signalled to the user for arrest of charge current (this indicating that a charger other than the recommended rating is used as the shunting capacity is exceeded).

During this shunting period, heat is produce by the shunting elements thus mimicking the operation of a Ni-Cad cell; a charger with temperature sensing will detect this temp rise and stop delivery of the fast charge current. Also, on shunting say 1C from the battery, a voltage drop across the battery terminals will result; this will be deteced as a - V thus again mimicking Ni-Clad characteristics. Battery packs thus controlled are therefore autonomous as regards their charge control. Dangerous cell temperatures result in the full shunt current and alert signals.

Through the monitor of the charge and discharge currents, the micro-controller computes the charge state of the battery makes corrects for cell temperature and magnitude of current from the cells then displays the results LCD and LED, for example by counting.

Optional warning tones based on say, present charge levels, e.g. low charge and full charge warning beeps are also controlled by the micro-controller.

The shunting circuit, under control of the micro-controller, is also programmed to 'auto-condition' the battery complete discharge followed by full charge. This feature may also or exclusively be user initiated.

### Battery Operating Modes Parameters

### Rest-Mode

Here the battery nieith has a load across its terminals nor receives a charging current into its terminals. Ni-cads in this state slowly self discharge with a current equivalent to Isd that is a function of the cells temperature. The charge at rest mode, Qr, relative to the initial charge, Qir, is therefore:
$\text{Qr = Qir - Σ {Isd(T)} δ t}$ , summed thru time in rest mode.

### Discharging

Here there is a net current, Idd, out of the battery cells.

Under discharge there must be a battery voltage within its normal operating range; this absolute voltage is a function of the cell temperature. Under the lower threshold voltage, the battery can he considered fully discharged.

For discharge in its temperature compensated operating voltage range, the remaining charge in the battery Qd is a function of the magnitude Imd of current taken from the battery and the cell temperature.
$\text{Qd = Qi - Σ {Idd(imd,T)+Isd(T)}δ t}$ summed over the total discharge time and for large discharge currents the self discharge current will be proportionaley insignificant hence can be ignored.

### Charging

Here there is a net current, Icc, into the battery cells.

On charging completely discharged cells, there will be a wait time before the battery voltage falls within its normal operating range. The micro-controller must therefore wait for this to occur in defining zero charge state. The normal operational absolute voltage is a function of the cell temperature.

For charge currents in the cell's temperature compensated operating voltage range, the remaining charge in the battery, Qc is a function of the magnitude Imc of current charging the cells and their temperature.
$\text{Qc = Qi + Σ {IccIImc,T) - Isd(T)}δ t}$ summed through time in charge.

### Micro-Controller Functions

The following three modes of operation are defined:

### Mode-1 Battery not used- Rest Mode

Here the Self Discharge Summation Register is made to give a value representing the time and temperature corrected value of charge lost by the battery through self discharge.
1. The microprocessor is in its power down mode with the clock functions operating.
2. The cell temperature is measured periodically, say each 5 seconds ad the Mode-1 self discharge normalised temperature calculated and added to the self discharge sum register SDR1.
3. The voltage across Rs (Battery current sense resistor) is periodically monitored and if less than say 20uV which is considers to represent zero current and the microprocessor returns to the powerdown mode.

The Gates recommended remaining capacity Cr, when battery is at rest
$\text{Cr = Ca * exp(-t/T)}$ where
- Ca =: actual or initial capacity
- T =: time constant in days (to 36.8% Ca)
- t =: open circuit rest time in days

### Mode-2 Battery Discharging, i.e. net output current

Here the Battery Discharging register is made to give a value representing the temperature corrected charge lost through self discharge, plus, the time, temperature and amplitude (vs time) corrected value of charge drawn from the battery (calculated from the voltage drop across Rs).
1. The microprocessor powers up to full activity when the voltage amplitude measured across Rs exceeds say 20uV (chopper stabilised amp used).
2. The cell temperature is measured periodically, say each 5 seconds and the Mode-1 self discharge normalised temperature calculated and added to the self discharge sum register SDR1.
3. The voltage across Rs (Battery current dense resistor) is periodically monitored and if greater than say 20uV the microprocessor remains in the powerup state and continues to monitor the charge from the battery and temperature and amplitude correcting the Battery Discharge Register with the calculated current value of remaining charge. The display is then updated with this the battery's remaining charge.

### Mode-3 Battery Charging, i.e. net input current

Here the Battery Charging register is made to give a value representing the temperature corrected charge lost through self discharge, plus, the time, temperature and amplitude (vs time) corrected value of charge put into the battery (calculated from the voltage drop across Rs). On detection of a charging current, the battery characteristics pre-programmed in the memory of the microprocessor is displayed for a given time; an alternative would be to have the display when an optional battery condition batton is passed.

When a preset delta temperature profile with time is detected through the temperature sensing, the battery is considered x% charged and the charge current shunting transistor switched on with a completed magnitude of shunt current.

When outside of the range of preprogrammed absolute temperatures, the shunting current is command such as to result in a net trickle current (appropriate to the cell type) into the cells.
1. The microprocessor powers up to full activity when the voltage amplitude measured across Rs exceeds, say 20uV (chopper stabilised amp used) or an opposite charge current is sensed. It can remain powered as long as the net current charges the cells as it will be supplied from the external source.
2. The cell temperature is measured periodically, say each 5 seconds and the Mode-1 self discharge normalised temperature calculated and added to the self dishcharge sum register SDR1.
3. The voltage across Rs (Battery current sense resistor) is periodically monitored and if greater than say 20uV the microprocessor remains in the powerup state and continues to monitor the charge from the battery and temperature ad amplitude correcting the Battery Discharge Register with the calculated current value of remaining charge. The display is then updated with this the battery's remaining charge.
4. During shunting operation, Rs is continually monitored to take account of the current flow out/into the battery and the Battery Charge Register updated accordingly. Full charge will be computed based on average charge into battery after temperature profile has been detected.

From the foregoing, at least the following features of the invention will be appreciated:
a) Enables Overcharge Protection (Shunting of Charging Current) only when the batteries' temperature rise occurs is a result of the charging current (the microprocessor keeps track of the direction and magnitude of the battery current).
b) The temperature vs time characteristics of the battery type in use can be stored in the memory of the microprocessor ad used during calculation of full charge.
c) The 'shunting' of the charging current permits normal use of the battery during the fast charge operation.
d) Fast charging for industrial temperature range possible.
e) Battery self-conditioning possible - autodischarge followed by fast charge.
f) Battery charge state computation, charge display ad audio beeps for say 1o charge and end charge all controlled by the microprocessor.
g) Present Battery Charge capacity always known after self conditioning.
h) Microprocessor goes automatically in low current powerdown mode when t battery is not in use giving negligable battery current drain.
i) Battery characteristics and other manufacturing information can be stored in the microprocessor's non-volatile memory then displayed say at the start of each charge cycle.
j) Battery can be charged with existing NiCad chargers or simple chargers can be designed, e.g. a simple DC current charger can be used, the battery beeping on full charge.
k) For specialised application, the battery pack can make its data bus available interfacing with the application processor for read/write operations.
l) Readily adaptable to more complex protection schemes, e.g. series relay can also be controlled by battery's the microprocessor.

As an alternative or in addition to temperature and current sensing, an input transclucent from the electrolyte itself may be used to signal charging events. Such a signal may be drawn either from the main cell array or from a smaller auxiliary cell designed to be so probed.

An alternative embodiment is show in Fig 3 to which the following analysis may be applied.

When cell temp rise due to current into the cells, the voltage drop across Rs switches hard on the shunt transistor. 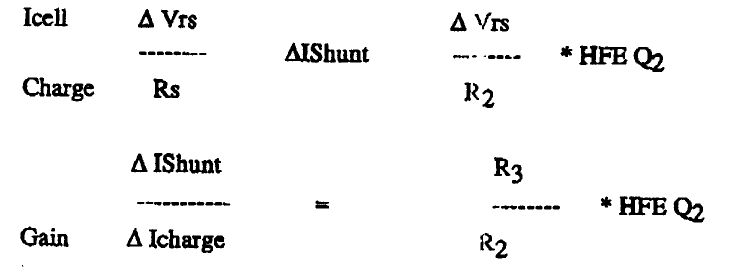
R₁, R₀ (ve temp coeff sensor) chosen to give DC bios at max temp. As cells cool (after shunting or in trickle) R₀ increases switching off Q₂. When cell temp due to current out of cell voltage drop across Rs acts to switch off the shunt transistor.

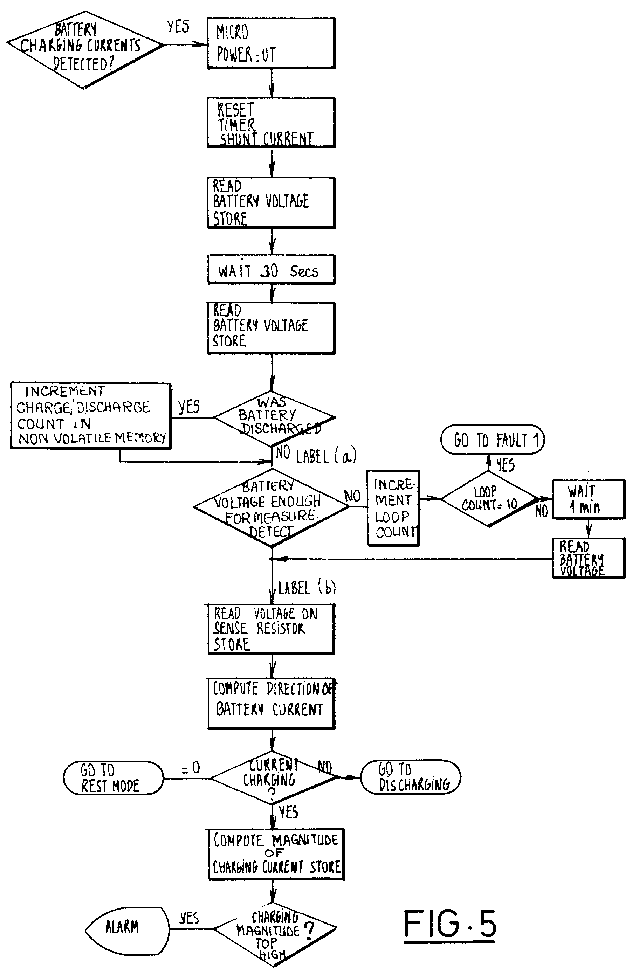

A battery pack incorporating the invention is illustrated in Fig 5.

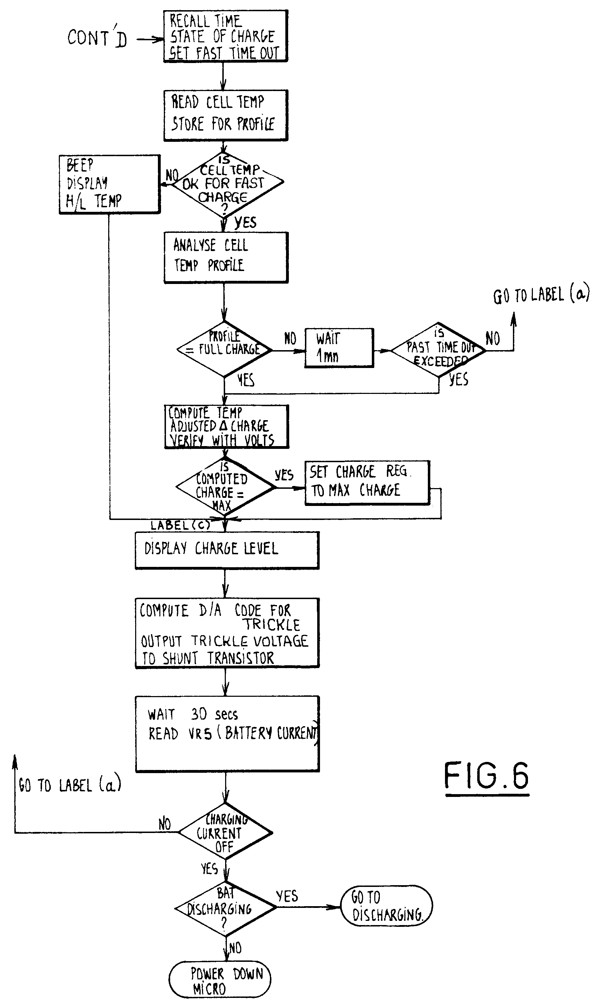

Fig 6 is a flow chart of operation to be read in conjunction with the following:

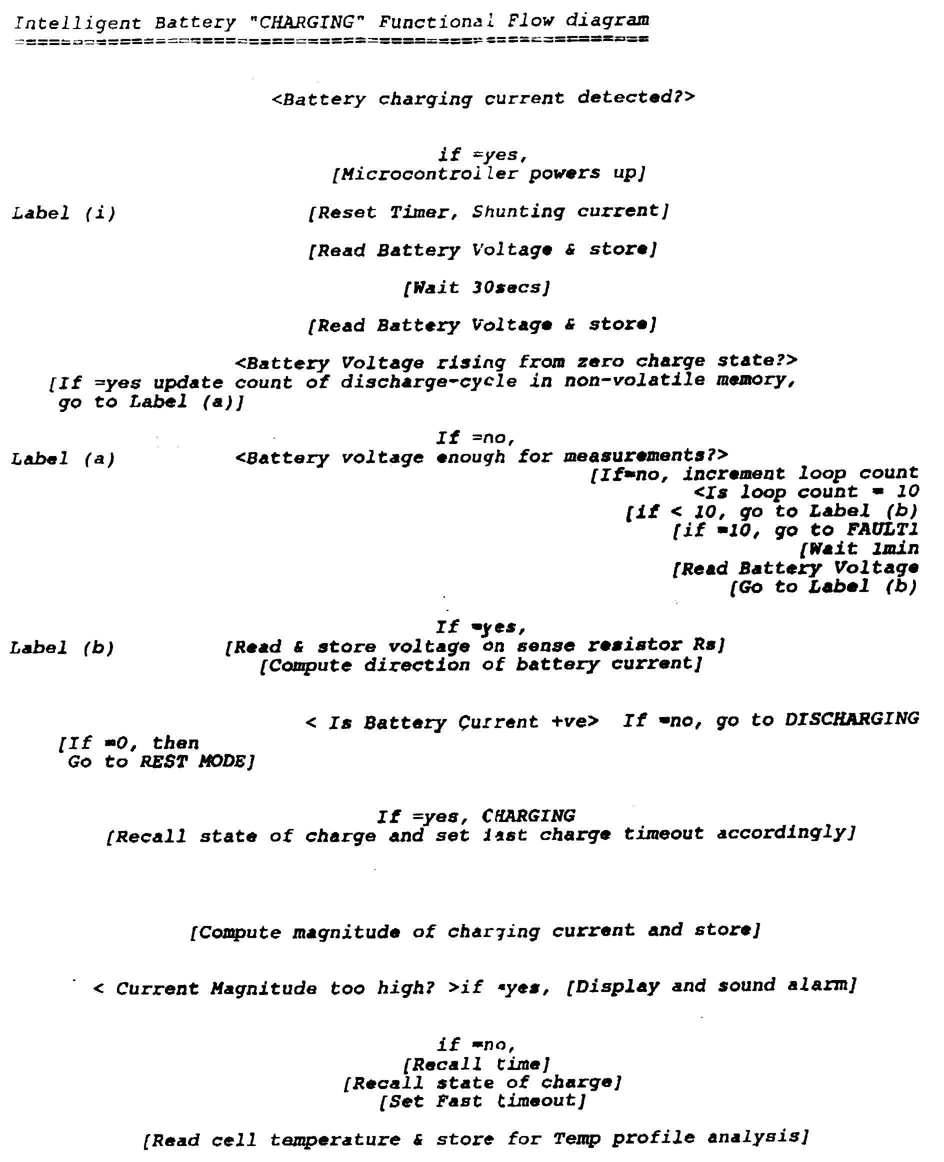

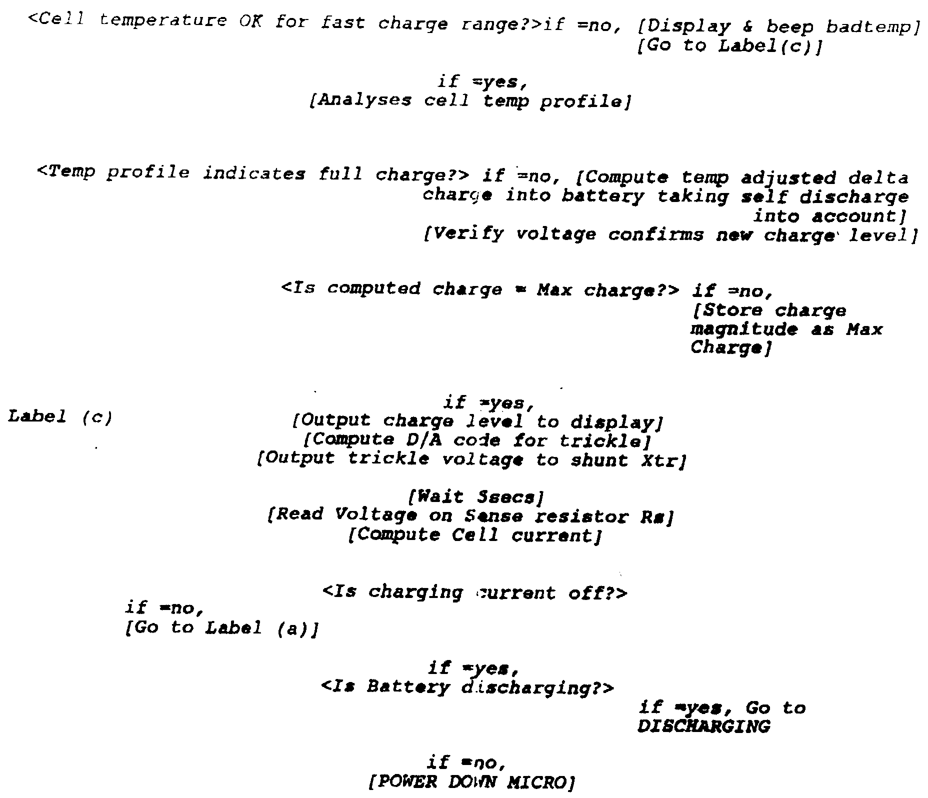

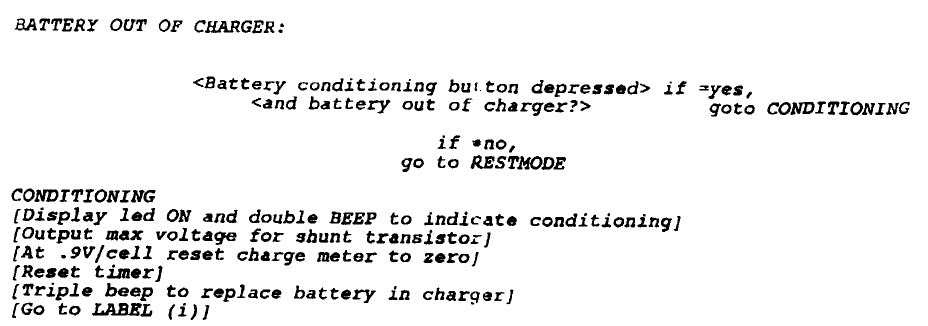

## Claims

1. A battery pack including a battery, means for receiving a battery charging current and protection means including means for detecting onset of substantially full charge and means for shunting charging current in the event of substantially full charge detection.

2. A battery pack as claimed in claim 1 and including means for signalling detected onset to a battery charger.

3. A battery pack as claimed in claim 2 and wherein said signalling means is arranged to mimic a substantially fully charged battery characteristic.

4. A battery pack as claimed in any preceding claim and including means for displaying or annunciating battery characteristics or levels.

5. A protection circuit forming part of a battery pack as claimed in any preceding claim.

6. A protection circuit as claimed in claim 5 and wherein said charging current shunting results in battery trickle charge.

7. The inventive features described in the description, or any combination thereof.

8. A battery pack as claimed in any of claims 1 to 4 and including a microprocessor.

9. A protection circuit as claimed in claim 5 or claim 6 and including a microprocessor.

10. A protection circuit as claimed in claim 9 realised in substantially integrated form.

11. A protection circuit as claimed in claim 9 or claim 10 and arranged to enforce a battery conditioning charging regime.
